# EUROPEAN PATENT APPLICATION

(11) **EP 4 850 872 A1**
(43) Date of publication of application: **09.12.2026**
(21) Application number: 26181771.2
(22) Date of filing: 28.05.2026
(51) Int. Cl.: B25J 9/16, B25J 9/00, B65G 43/08

(54) **AUTOMATED SYSTEM AND METHOD FOR THE MANAGEMENT AND AUTOMATED STORAGE OF PRODUCTS IN AN AUTOMATED WAREHOUSE**

(30) Priority: 05.06.2025 IT 202500013048
(71) Applicant: DS4 S.r.l, 24066 Pedrengo, (BG) (IT)
(72) Inventor: PETROGALLI, Angelo, I-24066 Pedrengo, BERGAMO (IT)
(74) Representative: De Lorenzo, Danilo

(57) **Abstract**

The invention relates to an automated system (1) integrating a first vision system (4), a robotic manipulator (6), and an electronic processing and control unit (8). The system enables the automated transfer of products (3) from a warehouse to a storage area (10). The automated system includes a second measurement system (5) for acquiring one or more features of the product during transport, so as to calculate the current position and orientation of the product (3) in the gripping mechanism (61) of the robotic manipulator (6), to correct the planned transport trajectory to obtain a modified product transport trajectory suitable for bringing the product (3) towards the target position and orientation in the storage area. The invention improves the efficiency, productivity, and safety of logistics operations, reducing errors and downtime.

## Description

### Field of application

The present invention relates to an automated system for warehouses, specifically an automated system for the transfer of products coming from an automated warehouse to a storage area, and to a method for the automated transfer of products coming from an automated warehouse, for example during palletization and depalletization operations of products in an automated warehouse.

### Background art

Automated plants for the management of warehouses constitute, in the context of modern logistics, a fundamental component, characterized by an intricate interaction of systems intended for the transport, recognition, and storage of products. Such systems, integrated into industrial environments, make use of advanced technologies for the real-time reading of the flow of containers, so as to ensure continuous movement of materials, thus avoiding stoppages in the production lines.

In particular, in the field of automated warehouses, it is common practice to perform different activities. These include:

1. Palletizing (customer order assembly): according to the customer order or a bill of materials, the required products, generally inside containers (also referred to in technical jargon as totes), are requested one after another These products are requested from the automated warehouse and placed in a dedicated storage unit (e.g. a pallet, Euro pallet, or larger box) until the bill of materials has been completed.;

2. Depalletization: the products are picked up from a pallet to be placed inside the totes in the automated warehouse;

3. Defragmentation: optimization of space within the automated warehouse by request of semi-empty totes, which are temporarily completely emptied, to be recomposed by optimizing the space or filling (for example, making a single full tote from two semi-empty totes).

4. Inventory: according to a list of codes, the totes containing products are requested from the warehouse, for verifying the correct location, quantity, or other possible features thereof (weight, codes, etc..).

During these activities other ancillary activities may be necessary, such as verification of the conformity of the product (e.g., reading a code in clear text or by means of an optical reader), weighing of the product (directly or as the difference in the weight of the tote before and after extraction of the product), other features (shape, size, color, etc..).

All the activities previously described are currently carried out in different ways. In some cases, they are carried out, completely or partially, manually by an operator.

In other cases, automatic solutions are used, which are increasingly spreading in the industrial world, which perform some of these operations.

For example, solutions are known for dynamic picking by means of 3D vision of boxes, generally with placement at a predetermined static point. These are, in essence, bin-picking solutions with an exclusive focus on the gripping of the product.

However, to date, no solutions exist capable of performing the aforementioned operations in an automatic and autonomous manner and so as to minimize idle times or the causes of downtime.

### Summary of the invention

One of the objects of the present invention is to overcome the limitations described with reference to the prior art, by devising an automated system capable of performing one or more of the activities previously described, with particular attention to the production rate and to improved production efficiency.

It is a further object of the present invention to control, in a dynamic, interconnected, and real-time manner, both the pick-up and the placement of the product, pursuing the above need for optimization (loads, volumes, nesting, order).

It is a further object of the present invention to adapt, in real time, to possible discrepancies or errors, automatically correcting the transport trajectory or ensuring the correct positioning of the products in the storage area.

Further, it is an object of the present invention to achieve the aforesaid objectives, ensuring maximum safety for the human operators who operate near the automated system, ensuring safe and reliable operation.

The aforesaid objects are achieved by means of an automated system for the transfer of products coming from an automated warehouse towards a storage area, and by a method for the automated transfer of products coming from an automated warehouse, according to the appended independent claims. The dependent claims describe preferred embodiments of the invention.

In the present description the automated system for the transfer of products coming from an automated warehouse to a storage area, may also be referred to in an equivalent manner as an automated system for the management and storage of products.

### Description of the drawings

The features and advantages of the present invention will however become apparent from the following description of some preferred embodiments thereof, provided by way of non-limiting indication, with reference to the accompanying drawings, in which:
- FIG. 1 is an axonometric view of an automated system for the transfer of products coming from an automated warehouse towards a storage area in an automated warehouse according to an embodiment of the invention;
- FIG. 2 is a top plan view of the automated system of FIG.1;
- FIG. 3 is an axonometric view of an automated system for the transfer of products coming from an automated warehouse towards a storage area in an automated warehouse, in which a robotic manipulator is in a step of transporting a product from the transport system and is passing through the second vision system; in this figure the protective structure has been artificially removed, so as to make the other components of the automated system more visible;
- FIG. 4 is an axonometric view of an automated system for the transfer of products coming from an automated warehouse towards a storage area in an automated warehouse, wherein a robotic manipulator is in a step of placing a product in a pallet within a storage area; in this figure the protective structure has been artificially removed, so as to make the other components of the automated system more visible;
- FIG. 5 is an axonometric view of a second measurement system for the acquisition of one or multiple features of the product during transport along the planned transport trajectory when the product is being gripped by the robotic manipulator;
- FIG. 6 is a front view of the second measurement system of Figure 5;
- FIG. 7 is an axonometric view of an automatic tilting system for tilting the products, according to an embodiment;
- FIG. 8 is an axonometric view of the automatic tilting system of Figure 7 for tilting products, on which a product is present.
- FIG. 9 is an axonometric view of the automatic tilting system for tilting the products in Figure 7, in which the product has been rotated.
- FIG. 10 is a rear elevation view of the tilting system in Figure 7, in which the pneumatic actuator for the rotation of the product is visible;

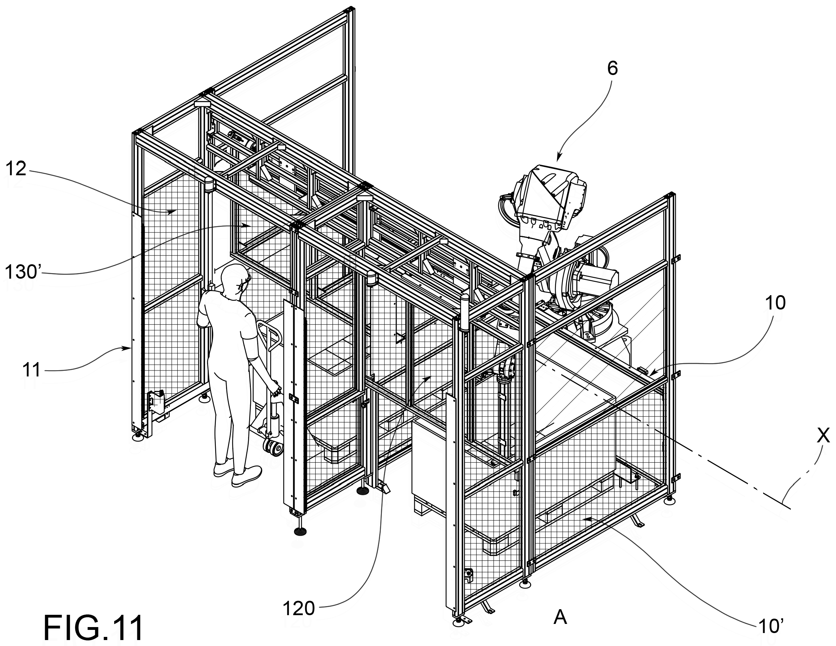

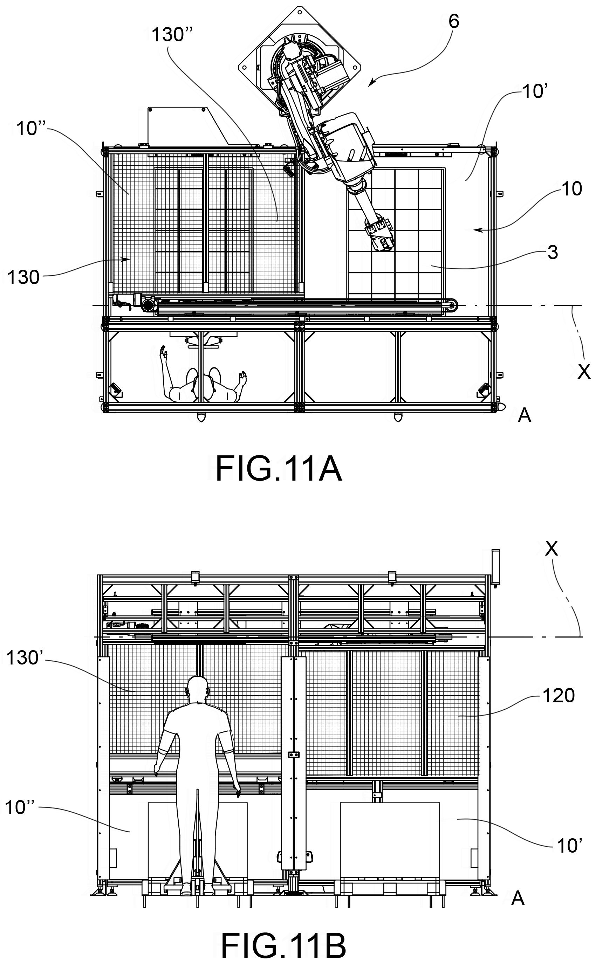

- FIG. 11 is an axonometric view showing a part of the automated system comprising the protective structure and the operational arrangement of the storage area of the automated system, in which the robotic manipulator is operating to place the products in the first sub-area of the storage area and the sliding vertical barrier is in the first safety position A;
- FIG. 11A is a front elevation view of the part of automated system in Figure 11;
- FIG. 11B is a top plan view of the part of automated system in Figure 11;

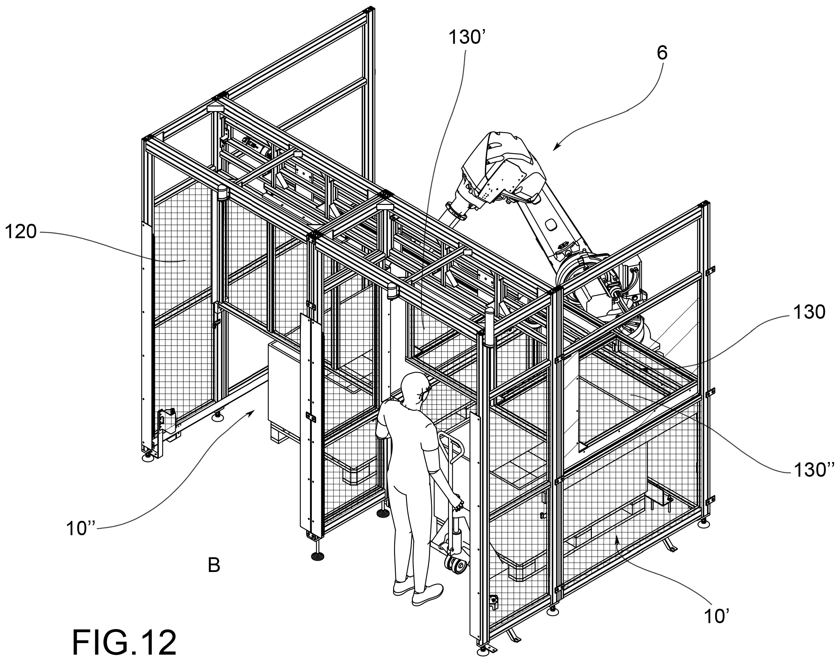

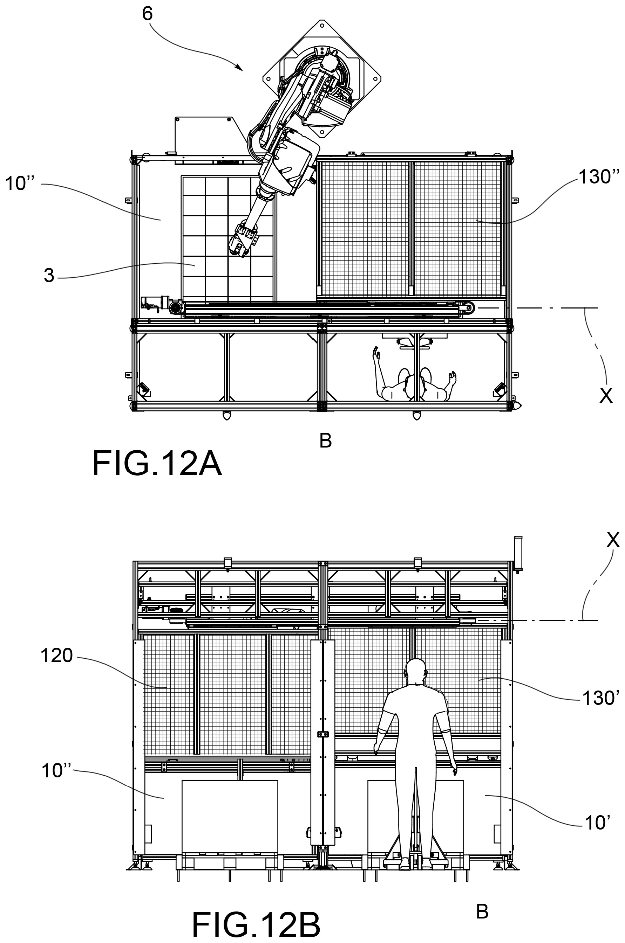

- FIG. 12 is an axonometric view showing a part of the automated system comprising the protective structure and the operational arrangement of the storage area of the automated system, in which the robotic manipulator is operating to place the products in the second sub-area of the storage area and the vertical sliding barrier is in the second safety position B;
- FIG. 12A is a front elevational view of the part of automated system in Figure 12;
- FIG. 12B is a top plan view of the part of automated system in Figure 12.

### Detailed description

Although the present invention is described below with reference to preferred embodiments shown in the drawings, the present invention is not limited to the embodiments described hereinafter and shown in the drawings. On the contrary, the embodiments described and shown clarify some aspects of the present invention.

With reference to the aforesaid appended figures, an automated system, for example a palletizing system, is designated overall by reference numeral 1, for the transfer of products 3 coming from a transport system 2 of an automated warehouse towards a storage area 10 in which the products 3 are stored in an orderly manner, for example on a pallet or in a container or a box, preferably of large size.

According to an embodiment, the transport system 2 is comprised in the automated system 1. The transport system 2 is configured to transport one or more products 3 along a predefined path P. The transport system 2 is designed to ensure continuous and controlled movement of products along the path, ensuring a regular flow towards the subsequent operating steps.

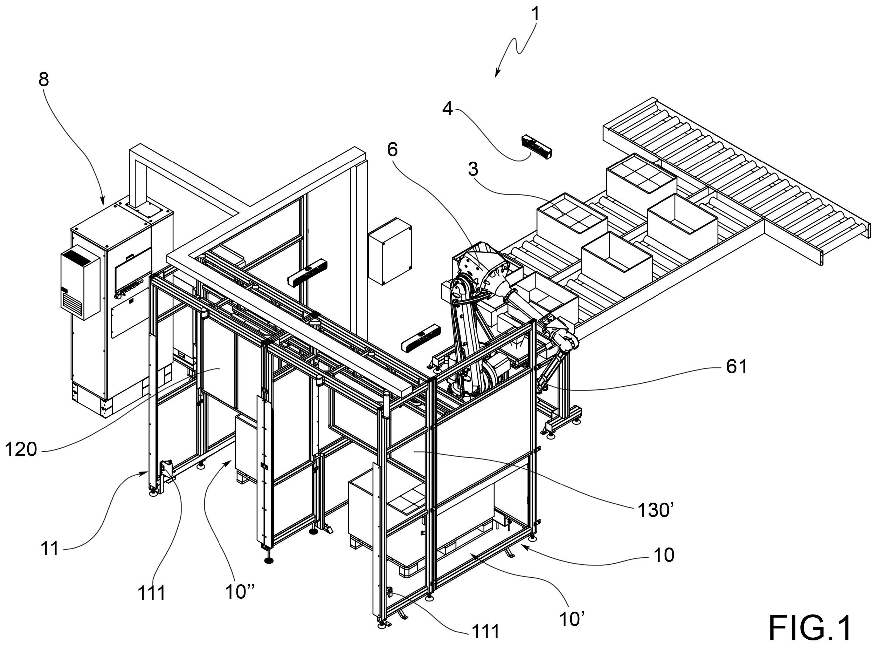

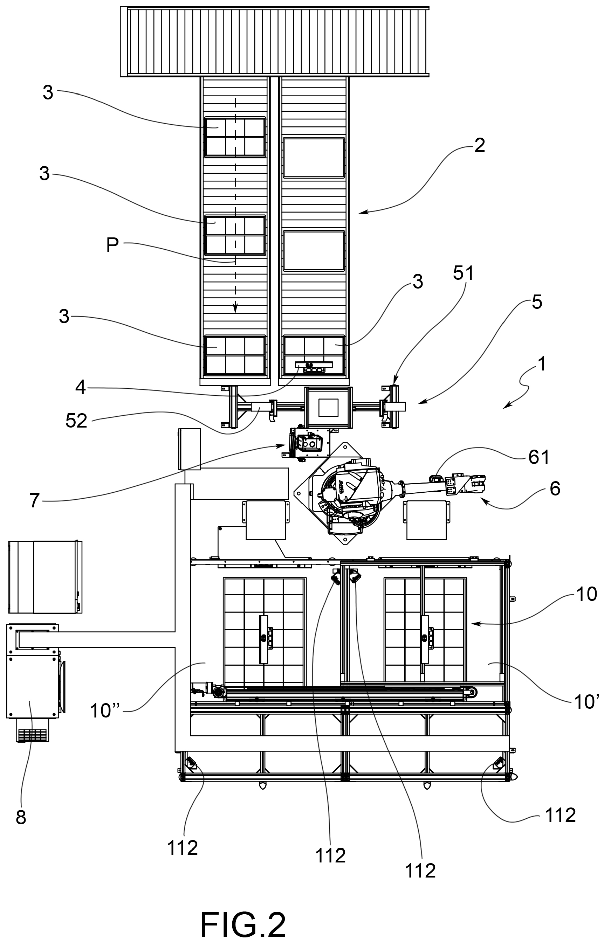

The transport system 2 is configured to transport one or more products 3, which may be housed within containers referred to in jargon as "totes", along a predefined path P. As illustrated in Figures 1 and 2, the transport system 2 comprises a series of idle or motorized rollers arranged in a linear manner, which ensure smooth and constant advancement of the totes along the path P. Preferably, the rollers are operated by an electric motor controlled by an electronic unit, which regulates the speed and the direction of the transport based on operating requirements.

According to an embodiment, the transport system 2 is provided with position sensors distributed along the path P, which detect the presence and position of the totes in real time, sending such information to the electronic processing and control unit 8. This configuration allows synchronization of the movement of the totes with the other components of the automated system, ensuring a continuous flow without interruptions.

According to a general embodiment, the system comprises a first vision system 4 configured to acquire two-dimensional or three-dimensional geometric information of the product 3 and information on the position and orientation of the product along the transport system 2 with respect to a predetermined reference frame. The first vision system 4 uses advanced imaging technologies to ensure accurate and real-time acquisition of the features of the product.

In an embodiment, the vision system 4 is a 2D vision system for obtaining three-dimensional images with 2.5D technology.

In another embodiment, the vision system 4 is a 2D vision system, in the case of products whose position along a determined axis is known and predictable.

Preferably, the first vision system 4 is configured to acquire two-dimensional or three-dimensional geometric information of the products 3 housed inside the containers called "totes" and to determine their position and orientation with respect to a predetermined reference frame. Such a system uses two-dimensional or three-dimensional imaging technologies to ensure accurate and real-time acquisition of the features of the products, even when these are located in non-standard positions or orientations within the totes. Further, the first vision system 4 is capable of detecting the presence of any foreign bodies or anomalies in the products, providing detailed information to the electronic processing and control unit 8 to allow optimal management of subsequent operations.

According to a general example, the system includes a robotic manipulator 6 comprising a gripping mechanism 61 configured to pick up a product 3 from the transport system 2. The robotic manipulator 6 is configured to transport the product 3 along a planned product transport trajectory and release the picked product 3 in a storage area 10. The robotic manipulator 6 is provided with a control system allowing precise and adaptive movements.

Preferably, the robotic manipulator 6, is an anthropomorphic device configured to perform picking, transport, and release operations of products along a planned trajectory. The robotic manipulator is preferably provided with six degrees of freedom, which allow it to perform complex and highly precise movements in all spatial directions, ensuring high operational flexibility. Such configuration allows the manipulator to dynamically adapt to the requirements of the system, correcting the position and orientation of the product during transport.

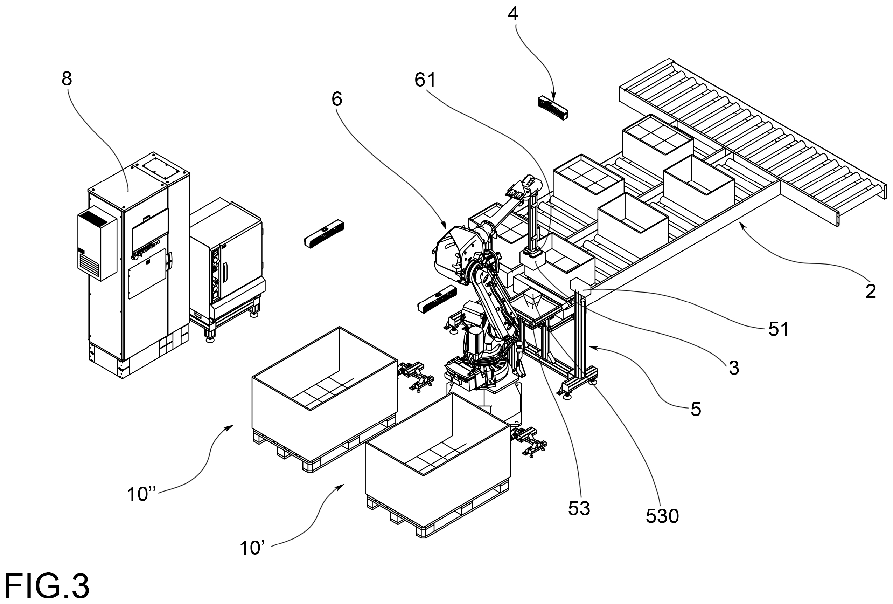

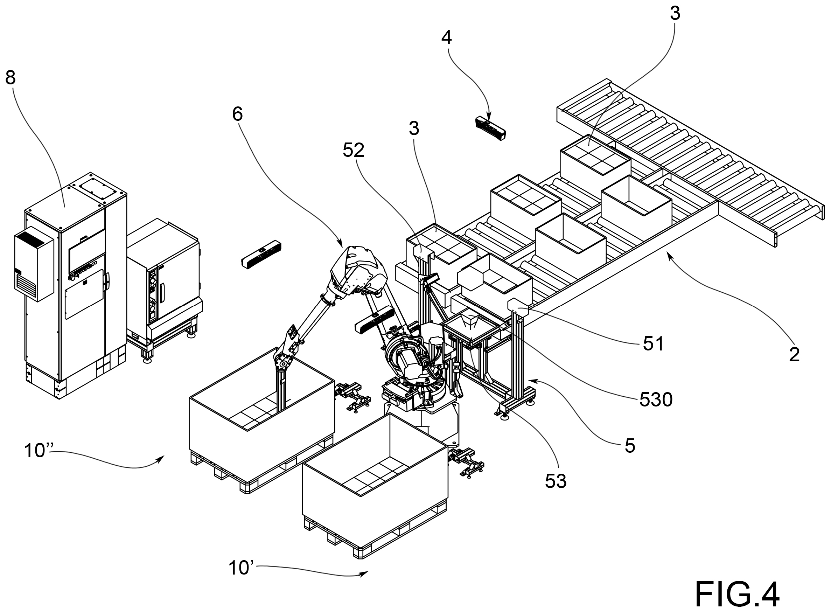

Further, the robotic manipulator comprises a gripping mechanism 61, designed to securely grasp products picked from the transport system and release them in the storage area. As can be seen in Figures 3 and 4, the manipulator is capable of operating in synergy with the first vision system and the electronic control unit 8, ensuring accurate picking of the products.

According to a general example, the automated system 1 also comprises a second measurement system 5 configured to detect one or multiple features of the picked product 3, during its transport along the planned trajectory. The second measurement system 5 allows acquiring one or multiple features of the product during movement, ensuring further control of its position and orientation while being gripped by the robotic manipulator 6.

According to an embodiment, the second measurement system 5 comprises (or is itself) a second vision system configured to capture second images of the picked product 3, during transport along the planned trajectory. The second vision system enables acquiring images of the product during movement, ensuring further control of its position and orientation while being gripped by the robotic manipulator 6.

According to an embodiment, the second measurement system 5 comprises (or is itself) a rangefinder, or a touch probe or an assembly of photocells or a mechanical recentering system, such as, for example, a pneumatic doctor blade.

The automated system also includes an electronic processing and control unit 8 operatively connected with the first vision system 4, the second vision system 5 (or, evidently, the second measurement system 5) and the robotic manipulator 6. The electronic processing and control unit 8 is configured to receive two-dimensional or three-dimensional geometric information of the product 3, instruct the robotic manipulator 6 to pick up the product 3 and plan a planned transport trajectory towards a target position and orientation within the storage area 10. Further, the processing and control unit 8 is capable of processing the images of the second vision system 5 to calculate any discrepancies between the current position and the predefined position of the product being gripped by the robotic manipulator 6, automatically and dynamically correcting the planned trajectory.

In particular, the electronic processing and control unit 8 is configured to:
a) receive, from the first vision system 4, the two-dimensional or three-dimensional geometric information of the product 3 and the information on the position and orientation of the product 3 within the predetermined reference frame;
b) instruct the robotic manipulator 6 to pick up the product 3 and receive the product 3 in a predetermined position and orientation within the gripping mechanism 61, and plan a planned product transport trajectory towards a target position and orientation within the storage area;
c) process the one or more features, for example the second images, from the second measurement system 5 (for example the second vision system) to calculate the current position and orientation of the product 3 within the gripping mechanism 61 and compare the current position and orientation of the product 3 within the gripping system with respect to the predetermined position and orientation;
d) upon detecting a discrepancy between the predetermined position and orientation and the current position and orientation, correct the planned product transport trajectory to obtain a modified product transport trajectory suitable for transporting the product 3 to the target position and orientation in the storage area, and update a command for the robotic manipulator 6 with the modified product transport trajectory.

Preferably, the electronic processing and control unit 8 is configured to perform operations c) and d) dynamically in real time during the movement of the robotic manipulator 6.

According to an embodiment, the automated system 1 comprises a second vision system 5 configured to capture second images of the picked product 3 during the transport of the product 3 along the planned product transport trajectory. The second vision system 5 is configured for acquiring the image of a product identification code, for example a bar code or a QR-code, present on the product 3. The electronic processing and control unit 8, operatively connected with the second vision system 5, is configured to decode the product identification code, for example the bar code, and compare the decoded information with product information corresponding to such decoded information stored in a database in a storage device of the electronic processing and control unit 8.

The technical effect of this configuration is to ensure accurate and reliable identification of the products 3 during their transport, improving the traceability and management of the products themselves. Further, the dynamic acquisition of images of the product identification code, without needing to stop the movement of the product 3, allows maintaining high productivity of the automated system 1.

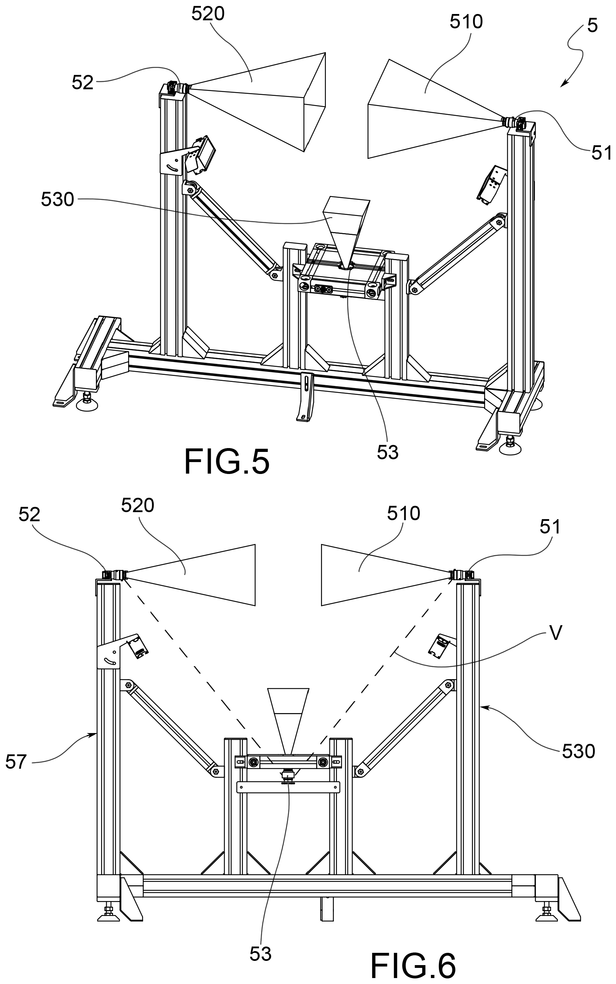

As illustrated in Figures 5 and 6, the second vision system 5 comprises a first camera 51 and a second camera 52, positioned so as to acquire two-dimensional images of the product 3 from different angles, ensuring an accurate reading of the product identification code.

According to an embodiment, the electronic processing and control unit 8 is further configured to acquire two-dimensional or three-dimensional information pertaining to the pallet present in the storage area 10 and to verify the correct position and orientation thereof, so as to be able to plan the placement point of the product by the robotic manipulator 6. This system is also capable of verifying the correct positioning of the product at the end of each placement.

According to an embodiment, the automated system comprises an automatic tilting system 7 suitable for receiving the product from the robotic manipulator 6 and configured to rotate the product 3 by a tilting angle α, for example by 90°, so as to allow the robotic manipulator to pick up the product 3 again with a different orientation with respect to the orientation of the product at the time of release into the automatic tilting system 7.

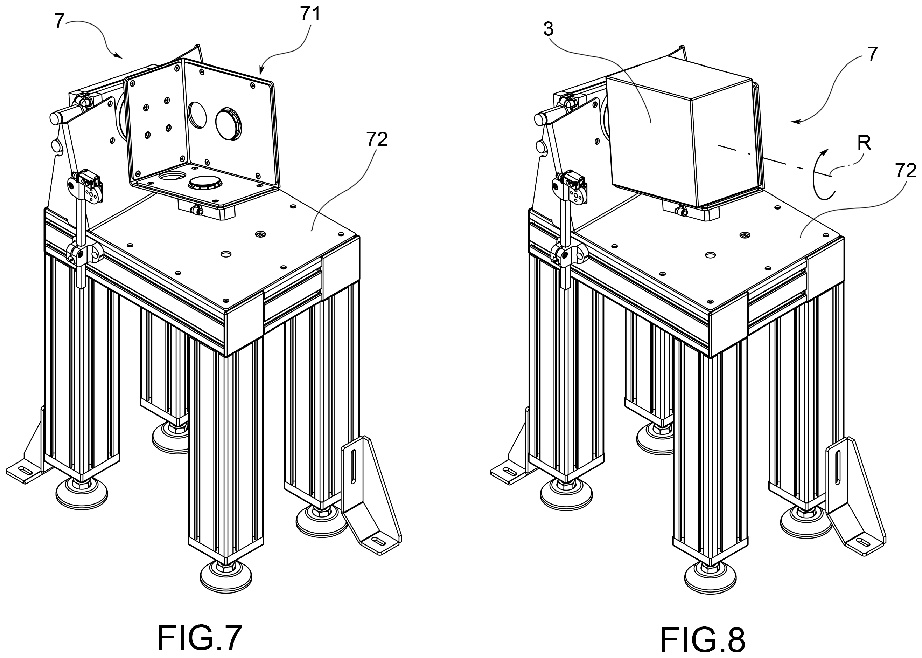

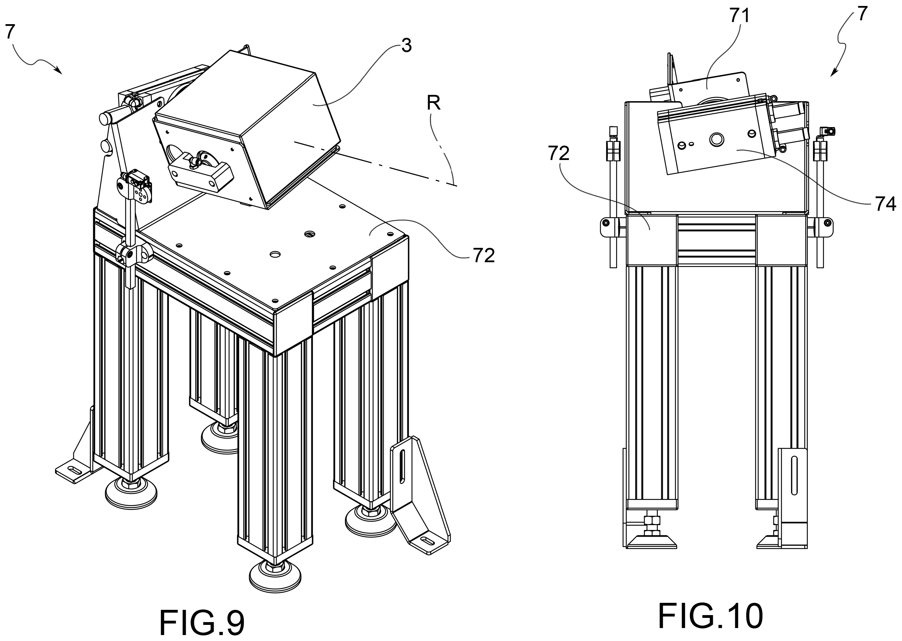

As illustrated in Figures 7, 8, 9, and 10, the automatic tilting system 7 comprises a support structure 72 which rotatably supports a rotating seat 71, on which the product 3 is positioned. The rotating seat 71 is actuated by an actuator 74, preferably a pneumatic actuator or an electric actuator, visible in detail in Figure 10, which allows an accurate and controlled rotation of the product 3 about an axis of rotation R, preferably horizontal, i.e. parallel to the ground.

Preferably, the automatic tilting system 7 is provided with position sensors which detect the correct placement of the product 3 on the rotating plane before the activation of the tilting mechanism. As shown in Figure 8, the product 3 is initially positioned on the rotating seat 71 in a starting configuration, while in Figure 9 the product 3 is visible after being rotated 90°. This configuration ensures that the product 3 is correctly oriented for subsequent handling operations by the robotic manipulator 6, improving the efficiency and precision of the automated system. Furthermore, the tilting operation is performed only if necessary and does not require a complex architecture of the gripping mechanism 61, which may remain of simple design.

According to an embodiment, the second vision system 5 comprises at least a first camera 51 and a second camera 52 positioned at a distance in front of the first camera 51 and in proximity to the transport system 2, such that, for at least a portion of a planned product transport trajectory, the product 3 is transported within a first field of view 510 of said first camera 51 and a second field of view 520 of said second camera 52, so as to acquire two-dimensional images of the product 3 from at least two different angles and provide said two-dimensional images to the electronic processing and control unit 8, for example for decoding the product identification code.

According to an advantageous embodiment, the second vision system 5 comprises at least one third camera 53 positioned between the first 51 and the second camera 52 and having a third camera field of view 530, incident, preferably perpendicular, to the first field of view 510 and to the second field of view 520, so that at least for the portion of the planned product transport trajectory, the product 3 is transported within the third camera field of view 530 so as to acquire images of the product 3 from a third angle and to provide the electronic processing and control unit 8 with data for calculating any correction of the planned product transport trajectory.

Preferably, the first 51, the second 52 and the third camera 53 are each a 2D camera.

According to an embodiment, the first camera 51, the second camera 52 and the third camera 53 are supported by a support structure 57 and are positioned at the three ends of a "V" shape, for example the first camera 51 is positioned at the right end of the "V" shape, the second camera 52 is positioned at the left end of the "V" shape and the third camera 53 is positioned at the lower vertex of the "V" shape.

In this way, when the product 3 is transported by the robotic manipulator 6 above the third camera 53 the image of the product profile is acquired and the processing and control unit 8 is capable of verifying both the conformity of the shape of the box and the actual orientation of the box in the gripping mechanism 61. Simultaneously, by virtue of the images of the first camera 51 and/or of the second camera 52, the product identification code is decoded by the electronic processing and control unit 8. All this occurs in real time during the passage of the robotic manipulator 6, without stopping at a stationary position, i.e. in a dynamic manner.

With specific reference to the spatial arrangement illustrated in Figures 2, 3, 4, 5 and 6, the synergistic interaction between the manipulator 6 and the second V-shaped vision system 5 results in an advantageous optimization of operational continuity. The support structure 57, accommodating the first camera 51 and the second camera 52 at the upper ends and the third camera 53 at a lower vertex, defines a three-dimensional optical portal having a transit plane intersecting a flight trajectory of the product 3. The technical effect of this specific geometric configuration lies in the fact that, while the robotic manipulator 6 performs the continuous transfer of the product 3 towards the storage area 10, the lower profile and the lateral surfaces of the product 3 simultaneously enter the respective fields of view 510, 520, 530. The third camera 53, operating with an optical axis incident on, or perpendicular to, those of the first camera 51 and the second camera 52, acquires a geometric image of the overall profile of the product 3 as projected onto the picking plane of the mechanism 61. This allows the electronic processing and control unit 8 to map the actual orientation of the product 3 directly while it is being actively manipulated by the picking mechanism. As a result, the decoding of any product identification codes (for example by means of the first camera 51 and/or the second camera 52) and the recalculation of the trajectory (for example by virtue of data coming from the third camera 53) take place simultaneously and abruptly during the dynamic transit of the robotic manipulator 6, thereby defining a kinematic inspection mode not found in systems with dwell stations or static sequential tilting operations.

According to an embodiment, the automated system 1 also comprises a safety system 11 comprising a protective structure 12 that delimits the storage area 10 and protects against access to the storage area 10 for the safety of operators during the operation of the robotic manipulator 6. Such protective structure divides the storage area 10 into a first sub-area 10' and a second sub-area 10", each of which is suitable for accommodating a pallet or a storage container for the storage of products 3 released by the robotic manipulator 6.

According to an embodiment, the electronic processing and control unit 8, in operations c) and d), is configured to establish a predictive and corrective closed-loop control while the robotic manipulator 6 is in continuous motion along the planned trajectory. When the second measurement system 5 detects the current geometric features of the product 3 in flight, the electronic processing and control unit 8 does not perform a mere identification operation or verification of formal congruence. Preferably, the electronic processing and control unit 8 is configured to instantaneously calculate the magnitude of the linear and/or rotational displacement (expressed in angular degrees) that the product 3 has undergone with respect to the gripping mechanism 61 due to inertial accelerations of the pick-up. The dynamic updating of the command for the robotic manipulator 6 is performed by means of instantaneous recalculation of the spatial target points (landing points), thereby generating a modified transport trajectory adapted to compensate for any error within the gripping mechanism 61 without interruption. The robotic manipulator 6, preferably, corrects the kinematics thereof in the sub-millisecond space during the continuous flight, reaching the first sub-area 10' or the second sub-area 10" in perfect alignment without ever interrupting the stroke or decelerating in a stationary manner.

Further, preferably, the safety system 11 comprises a vertical sliding barrier 120, slidably mounted to the protective structure 12 along a sliding direction X, preferably parallel to the ground. The vertical sliding barrier 120 is suitable for adopting a first safety position A in which the vertical sliding barrier 120 prevents access to the first sub-area 10' by an operator when the robotic manipulator 6 is loading products 3 into said first sub-area 10'. In this first safety position A, the sliding vertical barrier 120, however, allows at least partial access to the second sub-area 10" for the removal of a pallet or a storage container or for releasing a pallet or storage container to be filled.

Further, the vertical sliding barrier 120 is suitable for adopting a second safety position B in which the vertical sliding barrier 120 prevents access to the second sub-area 10" by an operator when the robotic manipulator 6 is in the process of loading products 3 into said second sub-area 10". In this second safety position B, the vertical sliding barrier 120 however allows at least partial access to the first sub-area 10' for the retrieval of a pallet or a storage container already filled or for the release of a pallet or a storage container to be filled.

According to an embodiment, the safety system 11 comprises an accessory barrier 130 having a vertical portion 130' and a horizontal portion 130'' arranged parallel to the ground. Such accessory barrier 130 is slidably supported by the protective structure 12 and is suitable for allowing only partial access to the first sub-area 10' when the sliding vertical barrier 120 is in the second safety position B. In other words, the vertical portion 130' of the accessory barrier is not aligned with the sliding vertical barrier 120, but is arranged closer to the robotic manipulator with respect to the sliding vertical barrier 120, so as to leave a small access space for the operator in the first sub-area 10'.

In a dual manner, therefore, the accessory barrier 130 is adapted to allow only partial access to the second sub-area 10" when the sliding vertical barrier 120 is instead in the first safety position A. In this case, the only partial access allows an operator to retrieve a pallet or a storage container but keeps them safe from the operations of the robotic manipulator 6.

In particular, the horizontal portion 130'' prevents an operator from being able to slip below the vertical portion 130' and re-emerge in the first sub-area 10' or in the second storage sub-area 10''. This further increases safety.

According to an embodiment, the safety system 11 comprises photoelectric barriers 111 and/or radar sensors 112 configured to monitor the operating area of the robotic manipulator 6 and/or the storage area 10. The electronic processing and control unit 8 is thus further configured to stop the automated system 1 upon receiving an unsafe condition signal from the photoelectric barriers 111 and/or from the radar sensors 112, or from processing such an unsafe condition signal, for example, the presence of an operator.

It is clear that the present invention also relates to a method for the automated transfer of products 3 coming from an automated warehouse towards a storage area 10. The method, which may preferably be carried out by means of an automated system described in the present invention, comprises the operating steps of:
A) acquiring, by a first vision system 4, two-dimensional or three-dimensional geometric information of the product 3 and information on the position and orientation of the product along a transport system 2 with respect to a predetermined reference frame;
B) picking up the product 3 from the transport system 2 using a robotic manipulator 6 equipped with a gripping mechanism, and transporting the product 3 along a planned product transport trajectory to a storage area 10;
C) capturing, by means of a second measurement system 5 (for example a second vision system), one or more features (for example second images) of the product 3 during transport along the planned trajectory;
D) receiving, via an electronic processing and control unit, the two-dimensional or three-dimensional geometric information of the product 3 and the information on the position and orientation of the product within the predetermined reference frame;
E) planning a planned product transport trajectory towards a target position and orientation within the storage area 10;
F) processing the one or more features of the product from the second measurement system 5 to calculate the current position and orientation of the product 3 within the gripping mechanism, and compare the current position and orientation of the product 3 with the predetermined position and orientation;
G) upon detecting a discrepancy between the predetermined position and orientation and the current position and orientation, correcting the planned product transport trajectory to obtain a modified trajectory suitable for bringing the product 3 to the target position and orientation in the storage area 10 and for updating the command for the robotic manipulator 6 with said modified trajectory.

Innovatively, the present invention enables the drawbacks cited with reference to the prior art to be brilliantly overcome.

In particular, by virtue of the invention, an automated system is made available that is capable of integrating a transport system, a first vision system, a robotic manipulator, and an electronic processing and control unit, allowing automated, productive and efficient transfer of the products from an automated warehouse to a storage area. The configuration of the first vision system for acquiring two-dimensional or three-dimensional information, and orientation, of the product ensures accurate positioning of the product in the gripping mechanism of the robotic manipulator. The electronic processing and control unit, operatively connected with the vision systems and the robotic manipulator, allows dynamically correcting the planned product transport trajectory in the event of discrepancies, improving reliability and reducing operational errors. This approach eliminates the necessity of manual interventions, increasing the efficiency and productivity of the system.

Further, in an advantageous manner, the addition of a second vision system configured for acquiring images of identification codes, such as bar codes or QR-code, enables accurate and automatic identification of the products during transport with the robotic manipulator. The decoding of codes and the comparison with the information stored in a database improve the traceability and the management of products, reducing the risk of identification errors. Further, the dynamic acquisition of images during the movement of the product eliminates the need to stop the system, maintaining high productivity.

In particular, the electronic processing and control unit is configured to execute in real time the operations of calculation and correction of the trajectory of the robotic manipulator. This dynamic capability makes it possible to immediately adapt to any discrepancies detected during transport, ensuring accurate positioning of the product in the storage area. Real-time processing reduces cycle times and improves the operational continuity of the system.

Advantageously, the capability of the electronic processing and control unit of acquiring two-dimensional or three-dimensional information related to the pallet in the storage area allows verifying the correct position and orientation of the pallet itself. This ensures precise placement of the products, optimizing the use of space and improving the stability of the load. Further, this functionality reduces the risk of positioning errors that could compromise the efficiency of the system.

Further, the inclusion of an automatic tilting system enables rotating the products by a predefined angle, for example 90°, to adapt the orientation of the product to handling and placement requirements. This functionality eliminates the need for complex gripping mechanisms, simplifying the design of the robotic manipulator and improving operational flexibility. Further, the tilting system ensures that the products are correctly oriented for subsequent operations, increasing the overall efficiency.

Advantageously, the use of at least two cameras in the second vision system, positioned spaced apart, allows acquiring two-dimensional images of the product from different angles. This configuration improves accuracy and speed in decoding identification codes and in verifying the orientation of the product. The capability of acquiring images from multiple perspectives reduces the risk of reading errors and ensures reliable identification even under complex operating conditions.

Further, in an advantageous manner, the addition of a third camera, positioned in a perpendicular manner with respect to the first two, enables acquiring images of the product from a third angle. This configuration further improves the capacity of the system to detect discrepancies in the orientation of the product and to calculate precise corrections to the planned product transport trajectory. The acquisition of images from three different angles increases the robustness of the system and reduces the margin of error.

In particular, the use of 2D cameras in the second vision system provides a balance between accuracy and technological simplicity. 2D cameras are sufficient for acquiring high-quality two-dimensional images at high speed, necessary for the decoding of the identification codes and for verifying the orientation of the product during the rapid passage of the robotic manipulator. This technological choice reduces the costs and the complexity of the system, without compromising its performance.

Further, the arrangement of the cameras at the ends of a V-shaped structure allows optimization of the cameras' fields of view, ensuring complete coverage of the product during the transport. This geometric configuration facilitates the simultaneous acquisition of images from different angles, improving accuracy in decoding codes and in verifying the orientation of the product. Further, the V-shaped structure simplifies and optimizes the integration of the vision system in the overall layout of the automated system.

The inclusion of a safety system with a protective structure that divides the storage area into sub-areas ensures the safety of operators during the operation of the robotic manipulator. The vertical sliding barrier, configured to assume different safety positions, allows controlled access to the sub-areas, permitting the retrieval or release of pallets without interrupting the operations of the robotic manipulator. This configuration improves operating continuity and reduces downtime.

Further, advantageously, the addition of an auxiliary barrier with vertical and horizontal portions provides a further level of safety, preventing operators from fully accessing the storage sub-areas during operation of the robotic manipulator. The configuration of the accessory barrier ensures safe partial access for the retrieval or release of pallets, reducing the risk of accidents and improving the protection of operators.

The integration of photoelectric barriers and radar sensors in the safety system enables real-time monitoring of the operating area of the robotic manipulator and the storage area. The electronic processing and control unit is configured to stop the system in the event of detecting unsafe conditions, such as the presence of an operator. This functionality increases the overall safety of the system and prevents potential accidents.

## Claims

1. An automated system (1), such as a palletizing system, for the transfer of products (3) coming from a transport system (2) of an automated warehouse to a storage area (10) where the products (3) are stored in an orderly manner, for example, on a pallet, comprising:
- a first vision system (4) configured to acquire two-dimensional or three-dimensional geometric information of the product and information on the position and orientation of the product along the transport system (2) with respect to a predetermined reference frame;
- a robotic manipulator (6) comprising a gripping mechanism (61) configured to pick up a product (3) from the transport system (2), said robotic manipulator being configured to transport the product (3) along a planned product transport trajectory and release the picked product (3) in a storage area (10);
said automated system (1) being **characterized in that** it comprises:
- a second measurement system (5) configured to detect one or more features of the picked product (3) during the transport of the picked product (3) along the planned product transport trajectory;
- an electronic processing and control unit (8) operatively connected to the first vision system (4), the second measurement system (5), and the robotic manipulator (6), said electronic processing and control unit being configured to:
a) receive, from the first vision system (4), the two-dimensional or three-dimensional geometric information of the product and the information on the position and orientation of the product within the predetermined reference frame;
b) instruct the robotic manipulator (6) to pick up the product (3) and receive the product (3) in a predetermined position and oriented position within the gripping mechanism (61), and plan a planned product transport trajectory towards a target position and orientation within the storage area;
c) process the one or more features from the second measurement system (5) to calculate the current position and orientation of the product (3) within the gripping mechanism (61) and compare the current position and orientation of the product (3) within the gripping system with the predetermined position and orientation;
d) upon detecting a discrepancy between the predetermined position and orientation and the current position and orientation, correct the planned product transport trajectory to obtain a modified product transport trajectory suitable for transporting the product (3) to the target position and orientation in the storage area, and update a command for the robotic manipulator (6) with the modified product transport trajectory.

2. An automated system (1) according to claim 1, wherein the second measurement system (5) is a second vision system, and the one or more features include secondary images of the product (3).

3. An automated system (1) according to claim 2, wherein the second vision system (5) is configured to capture the image of a product identification code, such as a barcode or QR code, present on the product, and the electronic processing and control unit (8) is configured to decode the product identification code and compare the decoded information with corresponding product information corresponding to said decoded information, said corresponding product information being stored in a database in a storage device of the electronic processing and control unit (8).

4. An automated system according to claim 1, or 2, or 3, wherein the electronic processing and control unit (8) is configured to dynamically execute operations c) and d) in real time during the movement of the robotic manipulator (6).

5. An automated system according to any one of the preceding claims, wherein the electronic processing and control unit (8) is further configured to acquire two-dimensional or three-dimensional information pertaining to the pallet present in the storage area (10) and to verify its correct position and orientation.

6. An automated system according to any one of the preceding claims, comprising an automatic tilting system (7) suitable for receiving the product from the robotic manipulator (6) and configured to rotate the product (3) by a tilting angle (α), for example 90°, so as to enable the robotic manipulator to pick up the product (3) with a different orientation compared to the orientation of the product at the time of release into the automatic tilting system (7).

7. An automated system according to any one of claims 2 to 6, wherein the second vision system (5) comprises at least a first camera (51) and a second camera (52) positioned at a distance in front of the first camera (51) and in proximity to the transport system (2), such that for at least a portion of the planned product transport trajectory, the product (3) is transported within a first field of view (510) of the first camera (51) and a second field of view (520) of the second camera (52), thereby enabling the acquisition of two-dimensional images of the product (3) from at least two distinct angles and providing the electronic processing and control unit (8) with said two-dimensional images, for example to facilitate the decoding of the product identification code.

8. An automated system according to claim 7, wherein the second vision system (5) comprises at least a third camera (53) positioned between the first (51) and the second camera (52) and having a third camera field of view (530), incident, preferably perpendicular, to the first field of view (510) and the second field of view (520), such that at least for the portion of the planned product transport trajectory, the product (3) is transported within the third camera field of view (530) so as to acquire images of the product (3) from a third angle and provide the electronic processing and control unit (8) with data for the calculation of a possible correction of the planned product transport trajectory.

9. An automated system according to claim 8, wherein the first (51), the second (52), and the third camera (53) are each a 2D camera.

10. An automated system according to claim 8 or 9, wherein the first camera (51), the second camera (52), and the third camera (53) are supported by a support structure (57) and are positioned at the three ends of a "V" shape, for example the first camera (51) is positioned at the right end of the "V" shape, the second camera (52) is positioned at the left end of the "V" shape, and the third camera (53) is positioned at the lower vertex of the "V" shape.

11. An automated system according to any one of the preceding claims, comprising a security system (11) that comprises:
- a protective structure (12) that delimits the storage area (10) and protects against access to the storage area (10) for the safety of operators during the operation of the robotic manipulator (6), said protective structure dividing the storage area (10) into a first sub-area (10') and a second sub-area (10''), each of which is suitable for accommodating a pallet or a storage container for the storage of products (3) released by the robotic manipulator (6);
- a vertical sliding barrier (120), slidably mounted to the protective structure (12) along a sliding direction (X), suitable for adopting a first safety position (A) in which the vertical sliding barrier (120) prevents access to the first sub-area (10') by an operator when the robotic manipulator (6) is loading products (3) into said first sub-area (10') but allows at least partial access to the second sub-area (10'') for the removal of a pallet or a storage container,
and wherein, the vertical sliding barrier (120) is suitable for adopting a second safety position (B) in which the vertical sliding barrier (120) prevents access to the second sub-area (10'') by an operator when the robotic manipulator (6) is in the process of loading products (3) into said second sub-area (10''), but allows at least partial access to the first sub-area (10') for the retrieval of a pallet or storage container.

12. An automated system according to claim 11, wherein the security system (11) comprises an accessory barrier (130) having a vertical portion (130') and a horizontal portion (130'') positioned parallel to the ground, said accessory barrier (130) being slidably supported by the protective structure (12) and being suitable for allowing only partial access to the first sub-area (10') when the vertical sliding barrier (120) is in the second safety position (B) and being suitable for allowing only partial access to the second sub-area (10'') when the vertical sliding barrier (120) is in the first safety position (A), wherein the partial access allows an operator to retrieve a pallet or storage container while ensuring safety from the operations of the robotic manipulator (6).

13. An automated system according to any one of claims 11 or 12, wherein the safety system (11) comprises photoelectric barriers (111) and/or radar sensors (112) configured to monitor the operating area of the robotic manipulator (6) and/or the storage area (10), and wherein the electronic processing and control unit (8) is further configured to halt the automated system (1) upon receipt of an unsafe condition signal from the photoelectric barriers (111) and/or radar sensors (112), or upon processing of such an unsafe condition signal, such as the presence of an operator.

14. A method for the automated transfer of products (3) from an automated warehouse to a storage area (10), comprising the following steps:
A) acquiring, by a first vision system (4), two-dimensional or three-dimensional geometric information of the product (3) and information on the position and orientation of the product along a transport system (2) with respect to a predetermined reference frame;
B) picking up the product (3) from the transport system (2) using a robotic manipulator (6) equipped with a gripping mechanism, and transporting the product (3) along a planned transport trajectory to a storage area (10);
C) capturing, by means of a second measurement system (5), one or more features of the product (3) during transport along the planned transport trajectory;
D) receiving, via an electronic processing and control unit, the two-dimensional or three-dimensional geometric information of the product (3) and the information on the position and orientation of the product within the predetermined reference frame;
E) planning a transport trajectory for the product (3) towards a target position and orientation within the storage area (10);
F) processing the one or more features of the product from the second measurement system (5) to calculate the current position and orientation of the product (3) within the gripping mechanism, and compare the current position and orientation of the product (3) with the predetermined position and orientation;
G) upon detecting a discrepancy between the predetermined position and orientation and the current position and orientation, correcting the planned transport trajectory to obtain a modified trajectory suitable for bringing the product (3) to the target position and orientation in the storage area (10) and for updating the command for the robotic manipulator (6) with said modified trajectory.
